# EUROPEAN PATENT APPLICATION

(11) **EP 2 360 548 A2**
(43) Date of publication of application: **24.08.2011**
(21) Application number: 11154284.1
(22) Date of filing: 14.02.2011
(51) Int. Cl.: G06F 1/04, G06F 1/32

(54) **Method and device for clock gate controlling**

(30) Priority: 12.02.2010 EP 10153509
(71) Applicant: Blue Wonder Communications GmbH, 01099 Dresden (DE)
(72) Inventor: Hesse, Kay, 01129, Dresden (DE); Melzer, Lars, 01099, Dresden (DE)
(74) Representative: Lippert, Stachow & Partner

(57) **Abstract**

A method and an activity tracking device for controlling clock gating of data processing block is described, which processing block is one of a plurality of data processing blocks of a circuitry system which are interconnected by a streaming data bus. The activity tracking device receives a busy indication from processing units and streaming data bus segments of the data processing block to keep track of the data transfer and processing activity therein, and has an output connected to a clock gate at the root of the local clock distribution network of the data processing block to gate off the clock of the data processing block when an idle condition is detected, and to recover the clock when a wake-up condition is detected. This provides a low complexity way of automatic clock gating in SoC designs, and generally a way to reduce power consumption of electronic devices.

## Description

### Field and background of the invention

The present invention relates to a method and a device for controlling clock gating of a data processing block, in particular a data processing block of a plurality of data processing blocks of a circuitry system which are interconnected by a streaming data bus.

Large Systems-on-a-Chip (SoCs) usually consist of several components that contain data processing modules, potentially together with a local controller, that perform some sort of defined (sub-) task. In the case of an SoC for wireless communication applications, for example, such components of the system could be the building blocks of a modem circuitry such as digital front end (DFE), Tx unit, shared RAM, forward error correction (FEC) data unit, fast Fourier transform (FFT) unit, parameter estimation unit, equalizer unit, searcher unit, FEC control unit and the like. Often, these components don't need to be active all the time; rather periods of data processing are followed by idle periods. It is then desirable to switch off the local clock(s) during these periods, generally to save power, and more specifically to increase the battery life for mobile devices.

Today, virtually all of these components are described in some hardware description language (HDL) like VHDL or Verilog, for then being translated into gate-level netlists by synthesis tools. A simple coding style for automatic clock-gating is as follows:

```
always @ posedge (clk) begin
            if (update_condition) begin
                  data_register <= new_value
            end
      end
```

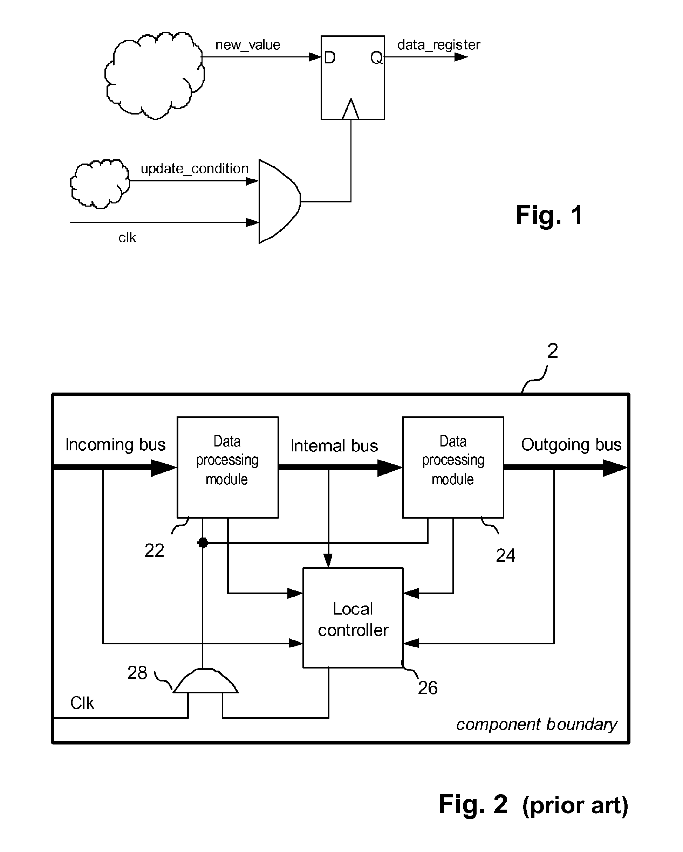

When using such an HDL representation which can be achieved for most pure data path components these software tools can automatically infer a structure as shown in Fig. 1. As can be seen in the figure, only in case of an update condition the AND gate transfers the clock (clk) to the flip-flop to trigger it to output the new value which is applied at its D input. So a first-level clock-gating is provided that is transparent to the rest of the design which is to say that it does not require active control of other units over clock switching.

Although this form of automatic translation can efficiently insert clock gating for large portions of the design, it is limited to the coding style mentioned above.

An example for a more complicated description is as follows:

```
     always @ posedge (clk) begin
           if (some_condition)
                 data_register <= new_value_a;
           else if (other_condition)
                 data_register <= new_value_b;
           else if (third_conditition)
                 data_register <= new_value_c;
           else
                 data_register <= new_value_d
     end
```

This kind of coding style cannot be handled by the synthesis tools in terms of automatic translation of clock gating mentioned in conjunction with Fig. 1, or it is not useful if the width of the data registers becomes too narrow. Otherwise stated, in case of a more complicated hardware description which includes several conditions the synthesis tool will not be able to determine a specific condition under which it can shut off the clock.

However, with sub-micron technologies decreasing structure sizes more and more, the dynamic switching power of the clock tree or clock mesh becomes an ever growing fraction of the whole dynamic power consumption of an electronic device.

As this switching power of the clock distribution network is not covered by the automatic clock gate inference described before, some form of higher-level control is required, in order to gate-off a local clock distribution network at its root. Some control processor must query the state of the data processing modules, as well as the state of incoming, internal and outgoing busses, as illustrated in Fig. 2. By way of example, the figure shows a data processing component comprising data processing modules 22, 24 and a controller 26 which controls a clock gate 28 to pass or not to pass the clock to processing modules 22, 24. When the controller determines that activity is neither requested nor going on in any of the data processing modules and data busses, it can then switch off the clock at gate 28. This prior art approach involves software and explicit determination of system states. This also implies that the local controller itself may not be part of the gated clock domain, or that another external higher level controller must take care of the local controller's clock.

A general object of the present invention is to reduce the power consumption of electronic devices. A more specific object of the invention is to provide a way for automatic clock gating in SoC designs.

### Summary of the invention

The present invention provides a device for controlling clock gating of one of a plurality of data processing blocks of a circuitry system which are interconnected by a streaming data bus structure, as set forth in claim 1. The device has an input connected to each of the data processing block's data processing units and bus segments for receiving a busy indication therefrom to keep track of the data transfer and processing activity therein, and has an output connected to a clock gate at the root of the local clock distribution network of the data processing block to gate off the clock of the data processing block when an idle condition is detected, and recover the clock when a wake-up condition is detected.

In a presently preferred embodiment, the streaming data bus uses a handshake-type transfer protocol which comprises a one-bit indication signaling the beginning and the end of a sequence of data, and said activity tracking device comprises a logical gate adapted to combine the one-bit busy indications from each of the data processing units and busses of the data processing block and to output a clock disabling signal when all one-bit busy indications signal absence of any data to be transferred or processed, and to output a clock recovering signal when at least one of the one-bit busy indications signals presence of any data.

In this way, the activity tracker can determine an idle condition as well as a wake-up condition, and can gate the clock at the root of the local distribution network independently from local controller and without requiring any software activity.

The invention also provides a method for controlling clock gating of one of a plurality of data processing blocks of a circuitry system which are interconnected by a streaming data bus as set forth in claim 6.

The novel approach for automatic clock gate control by activity tracking provides several advantages over the prior art. Clock gate insertion can be implemented and verified already on RTL level. As the clock is gated at the root of the local clock distribution network, high coverage of the data processing block is ensured, i.e. a whole module or component can be switched off to reduce activity of large sections of the clock tree which translates into a significant reduction of power consumption of a circuitry system which comprises the data processing block. Clock gating may gather 100% of the flip-flops of a data processing block, independently from any side conditions like minimum width of register bank or enable conditions.

The inventive method is implemented without any higher level software control required. Rather, an extra advantage of the new approach is, that even a local controller which may be a part of the data processing block can be clock gated.

Application examples for the method and activity tracking device for clock gating according to the invention are in data processing blocks such as digital front end (DFE) unit, LTE Tx unit, shared RAM unit, forward error correction (FEC) data unit, fast Fourier transform (FFT) unit, parameter estimation unit, searcher unit, and FEC control unit of a wireless telecommunication modem device, without being limited thereto.

The novel method and device for clock gating can be implemented hierarchically. That is, clock gating may be implemented in a data processing block which comprises several data processing modules to switch on and off the entire data processing block's clock, and may simultaneously or alternatively be implemented in any or all of the data processing modules comprised in a data processing block to support clock gating at a lower hierarchical level.

### Brief description of the drawings

Additional features and advantages of the present invention will be apparent from the following detailed description of a specific embodiment which is given by way of example only and in which reference will be made to the accompanying drawings, wherein:
- Fig. 1: shows a structure for automatic clock-gating which may be inferred from a simple coding style;
- Fig. 2: shows a block diagram of an SoC component comprising a local controller supervising clock gating according to prior art;
- Fig. 3: shows a block diagram of an SoC component comprising an activity tracker which controls clock gating according to the invention;

- Fig. 4: shows a block diagram of a data processing module as illustrated in Fig. 3, comprising an activity tracker according to the invention;
- Fig. 5: shows the signals of a streaming data transfer protocol that can be used in one embodiment of the invention;
- Fig. 6: shows an application example of the clock gating method and device of the invention in a circuitry system including two clock domains which are connected by a clock domain separation module and which can be clock gated independently from each other; and
- Fig. 7: shows a block diagram of an implementation of the clock domain separation module of Fig. 6.

### Detailed description of preferred embodiments

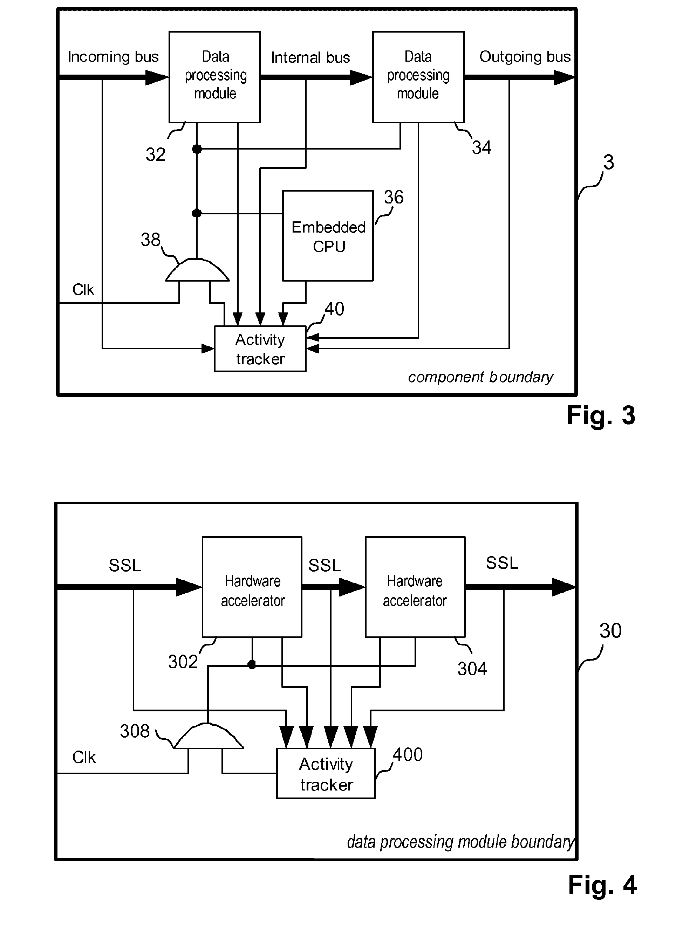

Fig. 3 shows a block diagram of a data processing component 3 which comprises data processing modules 32, 34 and an embedded controller 36. Data processing component 3 further comprises an activity tracking device 40 which receives busy indications from incoming, internal, and outgoing bus segments which are part of a streaming data bus, illustrated as bold arrows, that connect several data processing components of a circuit system such as an SoC, as well as from each of the data processing units 32, 34 connected into the streaming data bus. Activity tracker 40 may optionally receive state information from data processing units 32, 34 and from controller 36.

The streaming data bus uses a handshake-type transfer protocol which comprises a one-bit indication signaling the beginning and the end of a sequence of data.

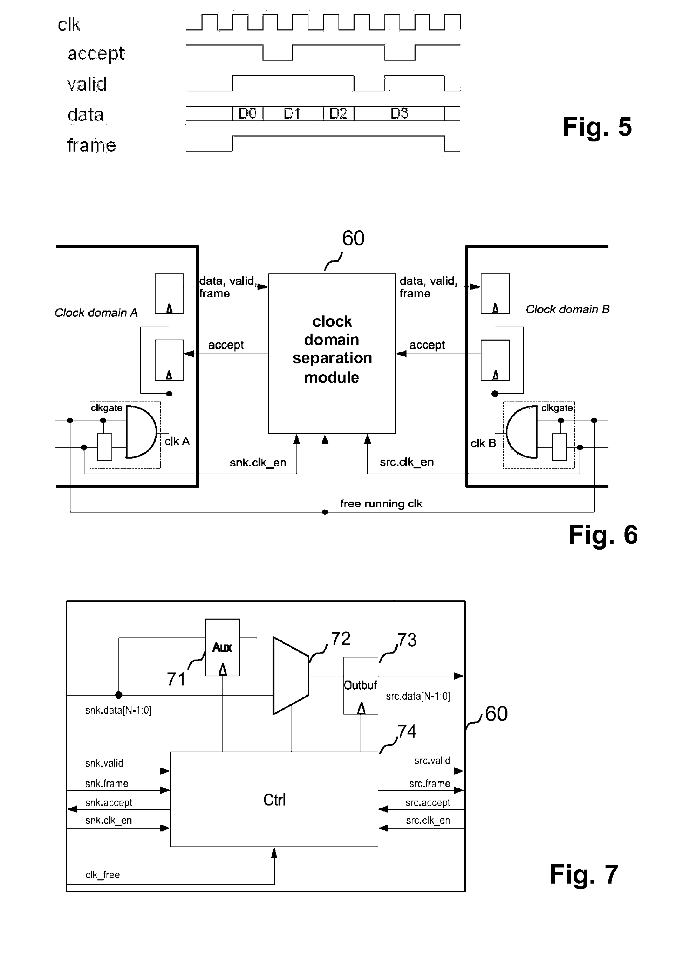

Fig. 5 details the signals of a streaming data transfer protocol that can advantageously be used in one embodiment of the invention for data transfer through a plurality of functional units of an SoC such as the processing component illustrated in Fig. 3. This transfer protocol, also referred to as Simple Streaming Link (SSL) below, has been disclosed in the applicant's co-pending EP application 10 197 315.4 entitled "A Method for High Speed Data Transfer".

SSL comprises four signals: data, valid, accept, frame. A data signal can have a width of multiple bits, e.g. 7, 16, 24, 32 bits. The valid/accept signals are similar to that of other handshake-type transfer protocols and are used to drive and stall the communication from source to sink. Source and sink can set or reset these signal at any time. Data is taken over if both are "high" on the rising edge of the clock. Data source and data sink must have the same understanding of what the frame signal means. Data source and data sink, herein, can be any of the functional units of an SoC such as, to give a non-limiting example, a wireless telecommunication modem device which includes functional units like front end (DFE) unit, LTE Tx unit, shared RAM unit, forward error correction (FEC) data unit, fast Fourier transform (FFT) unit, parameter estimation unit, searcher unit, and FEC control unit.

A "frame" in the sense of SSL transfer protocol is a logical group or sequence of data, such as e.g. an OFDM symbol, a block of control data, a block of information data, etc. Data transfer only occurs if the accept, valid and frame signals are high. In this case the frame signal marks the beginning and end of a data block transfer. The source can set the valid and frame signals in advance. The sink can set the accept signal in advance. In case the frame signal is not used by a source, it can clamp the output to "high". In case a sink does not know how to interpret an incoming frame signal, it can be ignored.

With this SSL transfer protocol the activity detection in activity tracker 40 of Fig. 3 can be reduced to the detection of a logical "1" of the frame signal. The frame signals from each of the data processing units 32, 34 and bus segments can be used as a busy indication and can be logically combined by activity tracker module 40 such as to output a clock disabling signal to clock gate 38 when all fame signals indicate absence of any data to be transferred or processed, and to output a clock recovering signal when at least one of the fame signals indicate the presence of data. It will be understood by a person skilled in the art that the activity tracker module 40 of the invention can be implemented by a simple logical gate that simply OR-combines the received binary frame signals.

Hence, the invention provides a very low complexity way of automatic clock gating. Optionally, activity tracker 40 can be implemented to additionally consider an internal state of data processing modules 32, 34 and/or the optionally embedded controller 36 for the enable condition of the clock provided by the activity tracker which internal state may also be expressed by a binary signal.

While the activity tracker of the invention has been explained in conjunction with the data streaming protocol illustrated in Fig. 5, it has to be noted that the invention is equally applicable with any other handshake-type streaming data transfer protocol which includes a sort of binary busy indication.

The method and device for controlling clock gating according to the invention can also be scaled down to the level of data processing modules 32 and 34 itself which are exemplified in Fig. 4 by a data processing module 30. Otherwise stated, the invention allows a hierarchical way of implementing clock gating. Data processing module 30 comprises data processing units 302, 304 connected by a Simple Streaming Link (SSL) data bus. Module 30 further comprises an activity tracking device 400 which combines the frame signals from incoming, internal, and outgoing SSL bus segments and from each of the data processing units 302, 304 which are illustrated as hardware accelerators in the figure, and outputs an enable/disable signal to clock gate 308 to gate on/off the clock at the root of the module's clock distribution network.

The control of clock gating according to the invention can be easily combined with a circuitry system described in the applicant's co-pending EP application entitled "Circuitry System and Method for Connecting Synchronous Clock Domains of the Circuitry System".

Fig. 6 illustrates two synchronous clock domains A and B and a clock domain separation module 60 arranged therebetween. Independent clock domains A, B may correspond to one or more data processing components as shown in Fig. 3 which comprise an activity tracker that controls clock gating according to the invention and that supports the clocks in clock domains A,B to be switched on and off.

Fig. 7 details one implementation of clock domain separation module 60 of Fig. 6, which allows for each clock domain A, B to switch its clock on and off independently from the state of the other clock domain, without risking data loss or protocol violation. It accepts both asynchronous and synchronous reset. Module 60 comprises an auxiliary input buffer 71, a multiplexer 72, a data output buffer 73, and a control logic 74. Control logic 74 is connected to each of said data output buffer 73, auxiliary input buffer 71, and multiplexer 72. Auxiliary input buffer 71 and multiplexer 72 each have a data input connected to the same data line to receive a data stream from the data source of clock domain A. The data output of auxiliary input buffer 71 is connected to a second data input of multiplexer 72. The data output of the multiplexer is connected to data output buffer 73, and the data output of the data output buffer is connected to a data output line to transmit data to a data sink in clock domain B.

A data stream received from clock domain A is passed through auxiliary input buffer 71, said multiplexer 72, and data output buffer 73 to clock domain B. Control logic 74 receives control signals from sink and source interfaces (snk. valid, snk.clk_en, src.accept, src.clk_en) of clock domain separation module 60. Data elements of the data stream are selectively buffered in auxiliary input buffer 71 for at least one clock cycle, in function of the received control signals, and control signals (snk. accept, src.valid) are emitted to the sink and source interface, respectively, of the clock domain separation device by control logic 74. Auxiliary input buffer 71 is operable to buffer data elements of a data stream that has been accepted during a clock cycle in which a non-accept condition of the data sink has been transferred from the source interface to the sink interface of the device and is also operable to buffer data elements of a data stream in case the source interface side's clock is gated off during transfer and the sink interface side's clock remaining active or being gated off following shut-off of the source interface clock. In this way, module 60 enables the clock in synchronous clock domains A, B to be switched on and off independently from each other while maintaining data integrity of the streaming data.

## Claims

1. A device for controlling clock gating of one of a plurality of data processing blocks (3; 30) of a circuitry system which are interconnected by a streaming data bus structure, which data processing block (3; 30) comprises at least one data processing unit (32, 34; 302, 304) and incoming bus segments, internal, and outgoing bus segments, wherein
said device (40; 400) has an input connected to each of the data processing units and bus segments for receiving a busy indication therefrom to keep track of the data transfer and processing activity therein, and has an output connected to a clock gate (38; 308) at the root of the local clock distribution network of said data processing block (3; 30) to gate off the clock of the data processing block when an idle condition is detected, and recover the clock when a wake-up condition is detected.

2. The device of claim 1, wherein said streaming data bus structure uses a handshake-type transfer protocol which comprises a one-bit indication signaling the beginning and the end of a sequence of data, and said tracking device comprises a logical gate adapted to combine the one-bit busy indications from each of the data processing units and busses of the data processing block and to output a clock disabling signal when all one-bit busy indications signal absence of any data to be transferred or processed, and to output a clock recovering signal when at least one of the one-bit busy indications signals presence of any data.

3. The device of claim 1 or 2, wherein said data processing block (3) is a processing component that comprises at least one data processing module (32, 34) and a local controller (36), and said idle condition of the processing component is detected in function of an internal state of said at least one data processing module and local controller.

4. The device of claim 1 or 2, wherein said data processing block (30) is a data processing module of a processing component (3) and the data processing unit is a hardware accelerator (302, 304).

5. The device of any of claims 1 to 4, wherein said data processing block is one of a group consisting of a digital front end (DFE) unit, LTE Tx unit, shared RAM unit, forward error correction (FEC) data unit, fast Fourier transform (FFT) unit, parameter estimation unit, searcher unit, and FEC control unit of a wireless telecommunication modem device.

6. A method for controlling clock gating of one of a plurality of data processing blocks of a circuitry system which are interconnected by a streaming data bus, comprising:
providing an activity tracking module in said data processing block;
keeping track of the states of said data processing block's data processing units and bus activity, by said activity tracking module;
when an idle condition is detected during said tracking step, gating off the clock at the root of the local clock distribution network of said data processing block; and
when a wake-up condition is detected during said tracking step, recovering the clock.

7. The method of claim 6, wherein said streaming data bus uses a handshake-type transfer protocol which comprises a one-bit indication signaling the beginning and the end of a sequence of data, and said tracking step comprises logically combining the one-bit indications from each of the data processing units and busses of the data processing block to disable the clock when all indications signal absence of any data to be transferred or processed, and to recover the clock when at least one of the indications signals presence of any data.

8. The method of claim 6 or 7, wherein said data processing block is a processing component that comprises at least one data processing module and a local controller, and said idle condition of the processing component is detected in function of an internal state of said at least one data processing module and local controller.

9. The method of claim 1 or 2, wherein said data processing block is a data processing module of a processing component and the data processing unit is a hardware accelerator.
